# EUROPEAN PATENT APPLICATION

(11) **EP 4 826 568 A1**
(43) Date of publication of application: **21.10.2026**
(21) Application number: 25738649.0
(22) Date of filing: 03.01.2025
(51) Int. Cl.: G06F 16/903, G06F 16/2453, G06F 9/50

(54) **DATA PROCESSING METHOD, AND DEVICE, STORAGE MEDIUM AND COMPUTER PROGRAM PRODUCT**

(30) Priority: 09.01.2024 CN 202410033809
(71) Applicant: Cloud Intelligence Assets Holding (Singapore) Private Limited, Singapore 189554 (SG)
(72) Inventor: YANG, Xiao, Hangzhou, Zhejiang 310030 (CN); LI, Feifei, Hangzhou, Zhejiang 310030 (CN); WANG, Sheng, Singapore 189554 (SG); LI, Yiran, Beijing 100020 (CN); ZOU, Yu, Hangzhou, Zhejiang 310030 (CN)
(74) Representative: 2SPL Patentanwälte PartG mbB
(86) International application number: PCT/IB2025/050058
(87) International publication number: WO 2025/149856

(57) **Abstract**

Provided in the present application are a data processing method, and a device, a storage medium and a computer program product. The method comprises: acquiring a query statement; generating an execution plan for the query statement, and adding target computation nodes between first computation nodes and second computation nodes of the execution plan; wherein the first computation nodes are computing nodes for executing target computation operations; the target computation nodes are parent nodes of the first computation nodes; and the second computation nodes are parent nodes of the target computation nodes; executing the execution plan to provide, at the first computation nodes, acquired tuples to the target computation nodes; and storing, in the target computation nodes, the tuples provided by the first computation nodes, performing batch processing on a plurality of stored tuples according to the target operations, and respectively providing a plurality of obtained output results to the second computation nodes .

## Description

### TECHNICAL FIELD

An embodiment of the present disclosure relates to the field of data processing, and in particular to a data processing method, a device, a storage medium, and a computer program product.

### BACKGROUND

In a database system, an execution plan is a data structure generated based on a query statement, describing an operation flow adopted by the database system to execute a query, and is composed of a plurality of computation nodes formed by operators. Taking a database system based on a volcano model as an example, different computation nodes are logically organized into a tree structure, and each computation node is responsible for executing different processing operations. Each computation node receives an output of a computation node of its child node as its own input, and then passes its own output upward to a computation node of its parent node. In a database system, this data transfer is implemented through tuples, where a tuple refers to a record in a database table. A computation node receives one tuple at a time as input for computation within the computation node, and produces one tuple as output.

As can be seen from the above description, computation nodes perform computation on a tuple-by-tuple basis. However, as computation tasks in modern database systems tend to become increasingly complex and diversified, such as in task scenarios involving a large number of tuple computations where various databases support machine learning, confidential computing, and heterogeneous computing with high performance, if the tuple-by-tuple computation approach is still adopted, the computation process will be cumbersome, and at the same time, relatively high computation resource overhead is likely to be incurred, resulting in poor computation effectiveness.

### SUMMARY

An embodiment of the present disclosure provides a data processing method, a device, a storage medium, and a computer program product, to solve the problems in the prior art where, when a computation task of a database system is executed using a tuple-by-tuple computation approach, the computation process is cumbersome and relatively high computation resource overhead is likely to be incurred.

In a first aspect, an embodiment of the present disclosure provides a data processing method, including:
obtaining a query statement;
generating an execution plan of the query statement, and adding a target computation node between a first computation node and a second computation node in the execution plan; where the first computation node is a computation node that executes a target operation; the target computation node is a parent node of the first computation node; and the second computation node is a parent node of the target computation node;
executing the execution plan, to provide tuples obtained by the first computation node to the target computation node as output results;
storing, at the target computation node, the tuples provided by the first computation node, performing batch processing on a plurality of stored tuples according to the target operation, and providing a plurality of output results obtained from the batch processing to the second computation node.

In a second aspect, an embodiment of the present disclosure provides a computing device, including a storage component and a processing component; where the storage component stores one or more computer program instructions, the computer program instructions are configured to be invoked and executed by the processing component, and the processing component executes the one or more computer program instructions to implement the data processing method according to the first aspect.

In a third aspect, an embodiment of the present disclosure provides a computer-readable storage medium storing a computer program, where the computer program, when executed by a computer, implements the data processing method according to the first aspect.

In a fourth aspect, an embodiment of the present disclosure provides a computer program product storing a computer program, where the computer program, when executed by a computer, implements the data processing method according to the first aspect.

In the embodiment of the present disclosure, a query statement is obtained, an execution plan for the query statement is generated, and a target computation node is added between a first computation node and a second computation node in the execution plan, where the first computation node is a computation node that executes a target operation, the target computation node is a parent node of the first computation node, and the second computation node is a parent node of the target computation node. Subsequently, the execution plan is executed, so that the first computation node provides obtained tuples as output results to the target computation node. The target computation node stores the tuples provided by the first computation node, performs batch processing on a plurality of stored tuples according to the target operation, and provides a plurality of output results obtained from the batch processing to the second computation node, that is, the parent node of the target computation node. By adding a target computation node as a parent node above the computation node that executes the target operation in the execution plan, the tuples obtained by the first computation node are output to the target computation node for storing, batch processing is performed on a plurality of tuples at the target computation node, and a plurality of output results are provided to the second computation node, that is, the parent node of the target computation node. Compared with the traditional approach in which a computation node receives one tuple as input for computation and produces one tuple as output in a tuple-by-tuple computation manner, batch execution is implemented, the operation process is simplified, computation tasks in scenarios involving a large number of tuple computations are better handled, and applicable scenarios for computation task execution are expanded.

These and other aspects of the present disclosure will be more concise and comprehensible in the description of the following embodiments.

### BRIEF DESCRIPTION OF DRAWINGS

In order to more clearly illustrate the technical solutions in the embodiments of the present disclosure or in the prior art, the accompanying drawings required for use in the description of the embodiments or the prior art are briefly introduced below. Obviously, the accompanying drawings in the following description are some embodiments of the present disclosure, and those of ordinary skill in the art can obtain other drawings based on these accompanying drawings without creative effort.
FIG. 1 is a flowchart of an embodiment of a data processing method provided by the present disclosure;
FIG. 2 is a schematic diagram of conversion of a custom type in a practical application according to an embodiment of the present disclosure;
FIG. 3 is a schematic diagram of a structure of an execution plan in a practical application according to an embodiment of the present disclosure;
FIG. 4 is a schematic diagram of scenario interaction in a practical application according to an embodiment of the present disclosure;
FIG. 5 is a schematic structural diagram of an embodiment of a data processing apparatus provided by the present disclosure;
FIG. 6 is a schematic structural diagram of an embodiment of a computing device provided by the present disclosure.

### DETAILED DESCRIPTION

In order to enable those skilled in the art to better understand the solutions of the present disclosure, the technical solutions in the embodiments of the present disclosure are clearly and completely described below with reference to the accompanying drawings in the embodiments of the present disclosure.

In some processes described in the specification and claims of the present disclosure and in the above accompanying drawings, a plurality of operations appearing in a specific order are included, but it should be clearly understood that these operations may be performed not in the order in which they appear herein or may be performed in parallel. The sequence numbers of the operations, such as 101, 102, etc., are merely used to distinguish the various different operations, and the sequence numbers themselves do not represent any execution order. In addition, these processes may include more or fewer operations, and these operations may be performed sequentially or in parallel. It should be noted that the descriptions of "first," "second," etc. herein are used to distinguish different messages, devices, modules, etc., and do not represent a sequential order, nor do they limit that the "first" and the "second" are different types.

In a database system, an execution plan is a data structure generated based on a query statement, describing an operational flow adopted by the database system to execute a query, and is composed of a plurality of computation nodes constituted by operators. Taking a volcano model-based database system as an example, different computation nodes are organized into a tree structure in terms of logic, and each computation node is responsible for performing different processing operations. Each computation node receives, as its own input, the output of a computation node that is its child node, and then passes its own output upward to a computation node that is its parent node. In the database system, this data passing is implemented through tuples, where a tuple refers to a record in a database table. A computation node receives one tuple at a time as input, performs computation within the computation node, and produces one tuple as output.

As can be seen from the above description, computation nodes perform computation tuple by tuple. As computation tasks of modern database systems increasingly tend to be complex and diversified, such as in task scenarios involving a large number of tuple computations where various databases provide high-performance support for machine learning, confidential computing, and heterogeneous computing, if the tuple-by-tuple computation approach is still adopted, the computation process will be cumbersome, and at the same time may incur relatively high computation resource overhead, resulting in poor computation performance.

In order to solve the above technical problems, the inventors proposed the technical solution of the present disclosure. In an embodiment of the present disclosure, a query statement is obtained; an execution plan for the query statement is generated, and a target computation node is added between a first computation node and a second computation node in the execution plan; where the first computation node is a computation node that performs a target operation; the target computation node serves as a parent node of the first computation node; the second computation node serves as a parent node of the target computation node; the execution plan is executed, so that the first computation node provides an obtained tuple as an output result to the target computation node; the target computation node stores the tuple provided by the first computation node, performs batch processing on a plurality of saved tuples according to the target operation, and provides a plurality of output results obtained from the batch processing to the second computation node, respectively.

In the embodiment of the present disclosure, by adding a target computation node above a computation node that performs a target operation as a parent node of the computation node in an execution plan, tuples obtained by the first computation node may be output to the target computation node for storing, and a plurality of tuples are subjected to batch processing at the target computation node, and a plurality of output results are provided to the second computation node, that is, the parent node of the target computation node. Compared with the tuple-by-tuple computation approach in the traditional solution in which a computation node receives one tuple as input for computation and produces one tuple as output, batch execution is realized, the computation process is simplified, and computation tasks in scenarios involving a large number of tuple computations can be better handled, expanding the applicable scenarios for computation task execution.

The technical solutions in the embodiments of the present disclosure are clearly and completely described below with reference to the accompanying drawings in the embodiments of the present disclosure. Obviously, the described embodiments are merely some embodiments of the present disclosure, rather than all of the embodiments. Based on the embodiments of the present disclosure, all other embodiments obtained by those skilled in the art without creative effort fall within the scope of protection of the present disclosure.

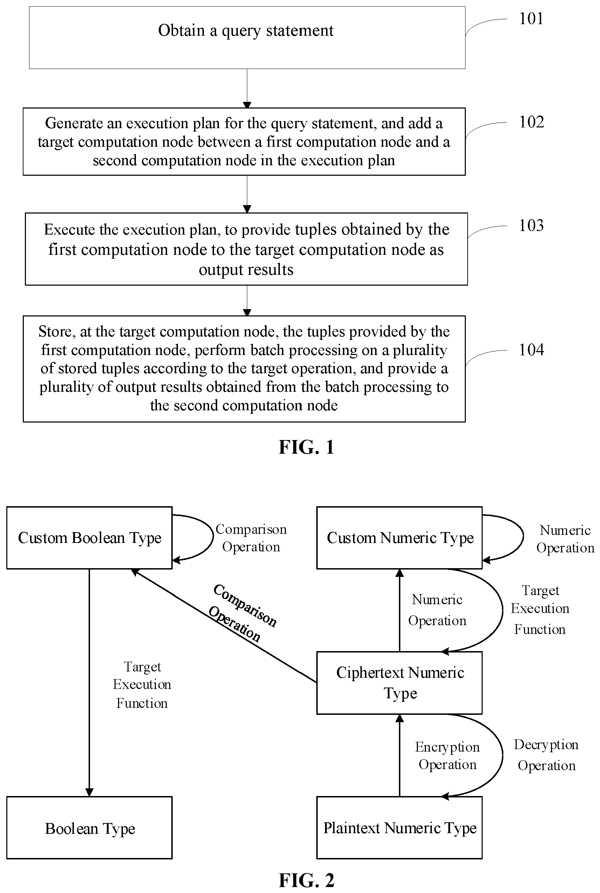

FIG. 1 is a flowchart of an embodiment of a data processing method provided by the present disclosure. The technical solution of this embodiment may be executed by a database engine. In practical applications, the technical solution of the embodiment of the present disclosure is applicable to a database processing system composed of a client and a server. The database engine may be deployed in the server. The method includes the following steps 101 to 104.

101: a query statement is obtained.

In this embodiment, the data processing method may be applied to a server. Optionally, the query statement may be sent by a client, and the server may receive the query statement sent by the client.

102: an execution plan for the query statement is generated, and a target computation node is added between a first computation node and a second computation node in the execution plan.

The first computation node is a computation node that performs a target operation, and the second computation node is the original parent node of the first computation node. After the target computation node is added, the target computation node serves as the parent node of the first computation node, and the second computation node serves as the parent node of the target computation node.

The execution plan may be implemented as various data structures such as a tree structure, a graph structure, etc. Taking a volcano model-based database system as an example, an execution plan tree for the query statement may be generated. The execution plan tree may include a plurality of computation nodes. For ease of description, a computation node that performs a target operation is referred to as a first computation node, and the original parent node of the first computation node is referred to as a second computation node. The target operation may include, for example, a numeric operation, a comparison operation, a logical operation, etc.

Further, a target computation node may be added between the first computation node and the second computation node. At this point, the added target computation node serves as the parent node of the first computation node, and the second computation node serves as the parent node of the target computation node.

Optionally, the execution plan may include a plurality of first computation nodes, and for each first computation node, a corresponding target computation node is added above the first computation node as the parent node of the first computation node.

103: the execution plan is executed, to provide tuples obtained by the first computation node to the target computation node as output results.

The execution plan is executed, and the first computation node is utilized to obtain tuples and provide the obtained tuples as output results to the target computation node. That is to say, unlike the traditional solution in which the first computation node needs to perform the target operation on data in the tuples, in the solution of the embodiment of the present disclosure, the first computation node no longer actually performs the target operation, and all of the obtained tuples are verified as passed and provided to its upper-level node, that is, the obtained tuples are only provided to its upper-level node.

104: at the target computation node, the tuples provided by the first computation node are stored, batch processing is performed on the plurality of stored tuples according to the target operation, and the plurality of output results obtained from the batch processing are provided to the second computation node, respectively.

The target computation node may first store the tuples provided by the first computation node.

And, the plurality of stored tuples are subjected to batch processing according to the target operation, and the plurality of obtained output results are provided to the second computation node.

Optionally, the target computation node may process the plurality of stored tuples according to the target operation in a case where a tuple storage capacity meets a processing requirement. The processing requirement may be set according to actual application scenarios. For example, it may be set such that when the tuple storage capacity meets a preset quantity, the plurality of stored tuples are subjected to batch processing; or when the tuple storage capacity reaches a storage threshold, the plurality of stored tuples are subjected to batch processing; or when it is determined that the first computation node has provided all of the obtained tuples and no longer continues to provide tuples, the plurality of stored tuples are subjected to batch processing, and so on.

In one practical application, the technical solution of the embodiment of the present disclosure is applied to a scenario in which external hardware needs to be invoked to perform the target operation, such as a computation scenario for implementing encrypted processing or accelerated processing, etc. Invoking external hardware may be, for example, invoking a graphics processing unit (GPU) for computation, invoking an external Field Programmable Gate Array (FPGA) for computation, etc. Therefore, optionally, in the target computation node, the external hardware may be invoked to perform batch processing on data objects in the plurality of stored tuples according to the target operation.

Specifically, the implementation process in which the target computation node performs batch processing on the plurality of stored tuples according to the target operation and provides the plurality of obtained output results to the second computation node is described in subsequent embodiments.

Based on the output results, a query result corresponding to the execution plan is obtained. Optionally, the server also feeds back the query result corresponding to the execution plan to the client.

In this embodiment, a query statement is obtained, an execution plan for the query statement is generated, and a target computation node is added between a first computation node and a second computation node in the execution plan, wherein the first computation node is a computation node that performs a target operation, the target computation node serves as the parent node of the first computation node, and the second computation node serves as the parent node of the target computation node. Subsequently, the execution plan is executed, so that the first computation node provides the obtained tuples as output results to the target computation node, the target computation node stores the tuples provided by the first computation node, performs batch processing on the plurality of stored tuples according to the target operation, and provides the plurality of output results obtained from the batch processing to the second computation node, respectively. By adding a target computation node above a computation node that performs a target operation as the parent node of the computation node in an execution plan, tuples obtained by the first computation node may be output to the target computation node for storing, and a plurality of tuples are subjected to batch processing at the target computation node, and a plurality of output results are provided to the second computation node, that is, the parent node of the target computation node. Compared with the tuple-by-tuple computation approach in the traditional solution in which a computation node receives one tuple as input for computation and produces one tuple as output, batch execution is realized, the computation process is simplified, and computation tasks in scenarios involving a large number of tuple computations can be better handled, expanding the applicable scenarios for computation task execution.

In practical applications, the execution plan may include a plurality of computation nodes, and during the execution of a computation task, not every computation node performs a target operation. Therefore, a computation node that performs the target operation, that is, the first computation node, is determined from among the computation nodes, and then a target computation node is added above the first computation node. Therefore, in some embodiments, the generating the execution plan for the query statement and adding a target computation node between the first computation node and the second computation node in the execution plan includes: generating an execution plan for the query statement, and in a case where the query statement involves a target operation that meets a preset condition, adding a target computation node between the first computation node and the second computation node in the execution plan.

Specifically, the preset condition may include one or more of the following implementations:
an operation targeting a specified data type;
an operation meeting a predetermined operation requirement;
an operation invoking external hardware;
and, an operation generating, based on a preconfigured custom type and an operation requirement of the custom type, data of the custom type.

The specified data type may include a numeric type, a string type, etc. Taking the specified data type being the numeric type as an example, at least one computation node for performing an operation targeting the numeric type is determined from the plurality of computation nodes of the execution plan as the first computation node, and a corresponding target computation node is added above it as a parent node.

The predetermined operation requirement may include, for example, a comparison operation, a logical operation, etc. Taking the predetermined operation requirement being the comparison operation as an example, at least one computation node for performing the comparison operation is determined from the plurality of computation nodes of the execution plan as the first computation node, and a corresponding target computation node is added above it as a parent node.

The operation calling external hardware may include invoking a GPU for computation, invoking an FPGA for computation, etc. At least one computation node that invokes external hardware may be determined from the plurality of computation nodes of the execution plan as the first computation node, and a corresponding target computation node is added above it as a parent node.

The custom type may be distinguished from primitive data types such as a numeric type, a string type, etc., and may be configured according to actual application scenarios. The operation requirement of the custom type may include generating custom type data from an operation targeting a primitive data type, and generating custom type data from an operation targeting a custom type. Thus, at least one computation node for performing the operation that generates custom type data based on the preconfigured custom type and the operation requirement of the custom type, is determined from the plurality of computation nodes of the execution plan as the first computation node, and a corresponding target computation node is added above it as a parent node.

By setting the above preset condition, the determination of the first computation node in the execution plan is realized, facilitating the addition of a target computation node above the first computation node, where the target computation node performs batch computation on the plurality of tuples provided by the corresponding first computation node, meeting the batch processing requirement.

The data processing method is described below by taking, as an example, a case where the target operation includes an operation that generates custom type data based on a preconfigured custom type and an operation requirement of the custom type.

Each primitive data type may have a corresponding custom type defined for it. For example, a primitive numeric type may correspond to a custom numeric type, a primitive string type may correspond to a custom string type, a primitive boolean type may correspond to a custom boolean type, and so on.

The operation requirement of the custom type may include generating custom type data from an operation targeting a primitive data type, and generating custom type data from an operation targeting a custom type. For example, it is preconfigured that a numeric operation targeting a primitive numeric type generates custom numeric type data, a comparison operation targeting a custom boolean type generates custom boolean type data, and so on.

In some embodiments, in a case involving the foregoing target operation, the computation result of the first computation node is set as passing verification. For example, the target operation includes a comparison operation that targets a primitive data type and generates custom boolean type data, and a comparison operation that targets custom boolean type data and also generates custom boolean type data. The computation result of the first computation node may be set to "true," that is to say, for a comparison operation targeting data of any primitive data type and for a comparison operation targeting data of any custom data type, the obtained comparison result is "true", so that the first computation node may output all data participating in the target operation and provide the data to the target computation node.

And, in the target computation node, data participating in the target operation among the stored tuples may be subjected to batch processing according to the target operation, and a plurality of computation results of the custom type are generated. For example, the target operation includes a comparison operation that targets a primitive data type and generates data of a custom boolean type, and a comparison operation that targets custom boolean type data and also generates custom boolean type data. At the target computation node, a comparison operation may be performed on the data participating in the target operation to generate computation results of the custom boolean type.

Moreover, considering that in practical applications, the output results provided by the target computation node to the second computation node are typically primitive type data, the target computation node may also convert the computation results of the custom type to the corresponding primitive data types.

Therefore, the method in which the first computation node provides the obtained tuples as output results to the target computation node includes the following.

In the first computation node, in a case where the target operation is performed on the obtained tuples, determining that the computation results pass verification, and storing the data participating in the target operation as data objects in the tuples, and providing the tuples as output results to the target computation node.

Further, the method of performing batch processing on the plurality of stored tuples according to the target operation includes the following.

In the target computation node, batch processing is performed on the data objects in the plurality of stored tuples according to the target operation, to generate a plurality of computation results of the custom type.

The plurality of computation results are converted to the corresponding primitive data types, respectively.

A plurality of output results to be provided to the second computation node are determined based on the plurality of computation results.

For example, after the plurality of computation results generated by the target computation node are converted to the corresponding primitive data types, a plurality of "true" computation results and a plurality of "false" computation results are included, and then a plurality of output results conforming to the query request to be provided to the second computation node may be determined, such as determining the tuples corresponding to the plurality of "true" computation results as the plurality of output results to be provided to the second computation node.

In this embodiment, by determining, in the first computation node, that the computation results pass verification in the case where the target operation is performed on the obtained tuples, the first computation node no longer actually performs the target operation, but instead stores the data participating in the target operation in the tuples and provides the tuples to the target computation node for batch processing at the target computation node, realizing batch processing of tuples.

In order to realize batch processing, a target computation node is added between the first computation node and the second computation node, and the first computation node directly provides the obtained tuples as output results to the target computation node, and the target computation node performs batch processing on the plurality of tuples according to the target operation. It is understood that in this process, the target operation targeting the data in the tuples is deferred, being deferred to the target computation node for batch execution, while the first computation node no longer performs the target operation. In order to avoid structural modification of the first computation node in the execution plan, a modification of the query statement may be adopted for implementation. Therefore, in some embodiments, the method of generating an execution plan for the query statement and adding a target computation node between the first computation node and the second computation node in the execution plan may include:
detecting that the query statement involves a target operation;
rewriting the query statement by wrapping a target execution function around an operation expression corresponding to the target operation;
parsing the query statement to generate an execution plan, and in a case where the query statement includes the target execution function, adding a target computation node between the first computation node and the second computation node in the execution plan.

Specifically, upon detecting that the query statement involves a target operation, such as the query statement including an operation expression corresponding to the target operation, the query statement may be rewritten, and a target execution function is wrapped around the operation expression corresponding to the target operation.

Taking a query statement SELECT * FROM t WHERE a > encrypt (3) as an example, the query statement may be implemented for a fully encrypted database (a database scheme that implements data security protection by utilizing ciphertext processing technology, which is implemented by relying on encryption technologies such as a Trusted Execution Environment (TEE for short) and Fully Homomorphic Encryption (FHE for short)). The query statement indicates obtaining, from a table t, all tuples whose data content in column a is greater than encrypted 3, that is, comparing the data in column a of the tuples in the table t with the encrypted data encrypt (3), the involved target operation being a comparison operation, and an operation expression corresponding to the target operation being a > encrypt (3). A target execution function, for example, may be represented as a force function, the target execution function may be called by a computation node in an execution plan to defer the target operation on data in a tuple from a first computation node to a target computation node for execution, thereby achieving batch processing.

Afterwards, the rewritten query statement may be parsed to generate an execution plan, and the rewritten query statement may be implemented as SELECT * FROM t WHERE force (a > encrypt (3)). And, in a case where the query statement includes the target execution function, the target computation node is added between the first computation node and the second computation node in the execution plan.

By rewriting the query statement by wrapping the target execution function around an operation expression corresponding to the target operation in the query statement, generating an execution plan by using the rewritten query statement, and adding the target computation node above the first computation node, it is achieved that, without modifying a structure of the first computation node, the obtained tuples are directly provided as output results to the target computation node, that is, the target operation on the data in the tuples is deferred to the target computation node for batch execution, thereby achieving batch processing.

On this basis, still taking the target operation that includes an operation of, according to a preconfigured custom type and an operation requirement of the custom type, generating data of the custom type as an example, the data processing method is described.

In some embodiments, the target execution function may be used to implement, in a case involving the target operation, setting an operation result of the first computation node as passing verification. For example, the target operation includes a comparison operation that targets a primitive data type data and generates data of a custom boolean type, and a comparison operation that targets custom boolean type data and also generates data of the custom boolean type, the operation result of the first computation node may be set to "true", that is to say, for a comparison operation targeting data of any primitive data type and for a comparison operation targeting data of any custom type, the obtained comparison results are all "true", so that the first computation node outputs all data participating in the target operation and provides the data to the target computation node.

And, the target execution function may also be used to implement, in the target computation node, performing batch processing on the data participating in the target operation in the stored tuples according to the target operation, and generating a plurality of operation results of the custom type. For example, the target operation including a comparison operation that targets data of a primitive data type and generates data of a custom boolean type, and a comparison operation that targets data of a custom boolean type data and also generates data of the custom boolean type, in the target computation node, a comparison operation may be performed on the data participating in the target operation to generate operation results of the custom boolean type.

And, considering that in practical applications, output results provided by the target computation node to the second computation node are typically data of a primitive type, the target execution function may also be used to implement, in the target computation node, converting the operation results of the custom type to corresponding primitive data types.

Therefore, a method for the first computation node to provide the obtained tuples as output results to the target computation node includes:
in the first computation node, calling the target execution function, so that in a case where the target operation is performed on the obtained tuples, it is determined that operation results pass verification, data participating in the target operation are stored as data objects into the tuples, and the tuples are provided as output results to the target computation node.

Further, a method for performing batch processing on the plurality of stored tuples according to the target operation includes:
in the target computation node, calling the target execution function to perform batch processing on data objects in the stored plurality of tuples according to the target operation, to generate a plurality of operation results of the custom type;
converting the plurality of operation results to corresponding primitive data types respectively;
determining, according to the plurality of operation results, a plurality of output results to be provided to the second computation node.

For example, after the plurality of operation results generated by the target computation node are converted to the corresponding primitive data types, the computation results include a plurality of "true" operation results and a plurality of "false" operation results, a plurality of output results conforming to a query request to be provided to the second computation node are determined, such as determining tuples corresponding to the plurality of "true" operation results as the plurality of output results to be provided to the second computation node.

In some embodiments, after determining the plurality of output results, the method further includes:
storing the plurality of output results in a processing order, for the second computation node to sequentially obtain the plurality of output results.

Specifically, a method for storing the plurality of output results in the processing order includes:
sequentially placing the plurality of output results into a storage queue in an order in which the corresponding tuples are provided to the target computation node.

By storing the output results in a queue form, sequential obtaining and outputting of tuples by the target computation node is achieved, and computation correctness is ensured without modifying original execution logic of the database.

Optionally, a ring buffer may be used to simultaneously ensure a relative order among the output results and reduce data movement. Alternatively, a general data structure such as a linked list may be used to maintain the queue, and the present disclosure does not impose a limitation thereon.

A technical solution of an embodiment of the present disclosure is applied, in a practical application, to a computation scenario for a fully encrypted database. The fully encrypted database is a database scheme that implements data security protection by utilizing ciphertext processing technology, which may be implemented by relying on encryption technologies such as a Trusted Execution Environment (TEE for short) and Fully Homomorphic Encryption (FHE for short). External hardware needs to be invoked to perform data processing in a trusted execution environment. In a fully encrypted database system, data content exists in a ciphertext form, and ciphertext processing is performed on-the-fly with immediate computation, with ciphertext being transmitted in the database as an intermediate form. Taking a TEE-based fully encrypted database as an example, tuples contain encrypted data. In a traditional manner, during computation, a secure call to a computation instance running inside the TEE is typically first implemented by using untrusted conventional software, then the encrypted data is decrypted in the computation instance, computation is performed by using plaintext, and finally computation results are output in ciphertext form. This tuple-by-tuple computation manner, because each computation requires a secure call to the computation instance inside the TEE, encryption and decryption, and the like, and the TEE is provided by external hardware, invoking the external hardware easily brings about relatively large computation resource overhead. Therefore, the batch processing computation scheme proposed by the present disclosure plays a significant optimization role for the above fully encrypted database system.

In the fully encrypted database, because data content exists in ciphertext form, it is typically necessary to define a ciphertext type and an operation type corresponding to the ciphertext type. Taking a numeric type as an example, in a plaintext database, a plaintext numeric type may be defined, such as an int4 type, which represents a 4-byte plaintext numeric type. Correspondingly, in the fully encrypted database, a ciphertext numeric type may be correspondingly defined, such as an enc_int4 type, which represents a 4-byte encrypted numeric type.

During plaintext processing, numeric operations may include addition, subtraction, multiplication, division, and the like, and comparison operations may include greater than, less than, and equal to operations. A numeric operation on data of a plaintext numeric type generates data of the numeric type, while a comparison operation may generate data of a boolean type. Correspondingly, during ciphertext processing, a numeric operation on data of a ciphertext numeric type also generates data of the ciphertext numeric type, while a comparison operation may generate data of the plaintext boolean type or data of the ciphertext boolean type, which may be set according to actual application scenarios.

Corresponding to the above primitive numeric types, the custom type may include a custom numeric type, for example, which may be represented as delay_int4, delay_enc_int4, and the like, and a custom boolean type, for example, which may be represented as delay_bool.

The operation requirement of the custom type may include: generating data of a custom numeric type from a numeric operation targeting a primitive numeric type, generating data of a custom boolean type from a comparison operation targeting a primitive numeric type, generating data of a custom numeric type from a numeric operation targeting a custom numeric type, and generating data of a custom boolean type from a comparison operation targeting the custom boolean type, and so on. Reference may be made to FIG. 2, which shows a schematic diagram of an embodiment of a custom type and operations.

Taking that data participating in the target operation includes data of a numeric type, and the target operation includes a numeric operation and/or a comparison operation of generating data of a custom type according to the preconfigured custom type and the operation requirement of the custom type as an example, in the target computation node, calling the target execution function to perform batch processing on the data objects in the plurality of stored tuples according to the target operation to generate a plurality of operation results of the custom type includes:
in the target computation node, calling the target execution function, and in a case where the target operation includes a numeric operation that generates, according to the preconfigured custom type and the operation requirement of the custom type, data of the custom type, performing batch processing on the data objects in the plurality of stored tuples according to the numeric operation to generate operation results of the custom numeric type;
in a case where the target operation includes a comparison operation that generates, according to the preconfigured custom type and the operation requirement of the custom type, data of the custom type, performing batch processing on the data objects in the plurality of stored tuples according to the comparison operation to generate operation results of the custom boolean type; in a case where the target operation includes both the numeric operation and the comparison operation that generate, according to the preconfigured custom type and the operation requirement of the custom type, data of the custom type, sequentially executing the numeric operation and the comparison operation on the data objects in the stored plurality of tuples in an operation order to perform batch processing, generating operation results of a custom numeric type in a case where a last operation in the operation order is the numeric operation, and generating operation results of a custom boolean type in a case where the last operation in the operation order is the comparison operation.

Further, converting the plurality of operation results to the corresponding primitive data types respectively includes:
in a case where the operation results include operation results of the custom numeric type, converting the operation results of the custom numeric type to operation results of a primitive numeric type; and, in a case where the operation results include operation results of the custom boolean type, converting the operation results of the custom boolean type to operation results of a primitive boolean type.

The following takes as an example that the data participating in the target operation includes data of a ciphertext numeric type, and the target operation includes a comparison operation that generates, according to the preconfigured custom type and the operation requirement of the custom type, data of the custom type, to describe the data processing method.

For example, still taking the query statement SELECT * FROM t WHERE a > encrypt (3) as an example, the query statement indicates obtaining, from the table t, all tuples whose data content in column a is greater than encrypted 3. Taking a volcano model commonly used in relational databases as an example, an execution plan generated according to the query statement may include two computation nodes: a SCAN node and an Output node. The SCAN node obtains one tuple from a storage medium each time it is executed, and completes a determination of whether the data content in column a of the tuple is greater than encrypted 3. The Output node, as a parent node of the SCAN node, continuously calls the SCAN node to obtain tuples output by the SCAN node, until the SCAN node no longer outputs tuples.

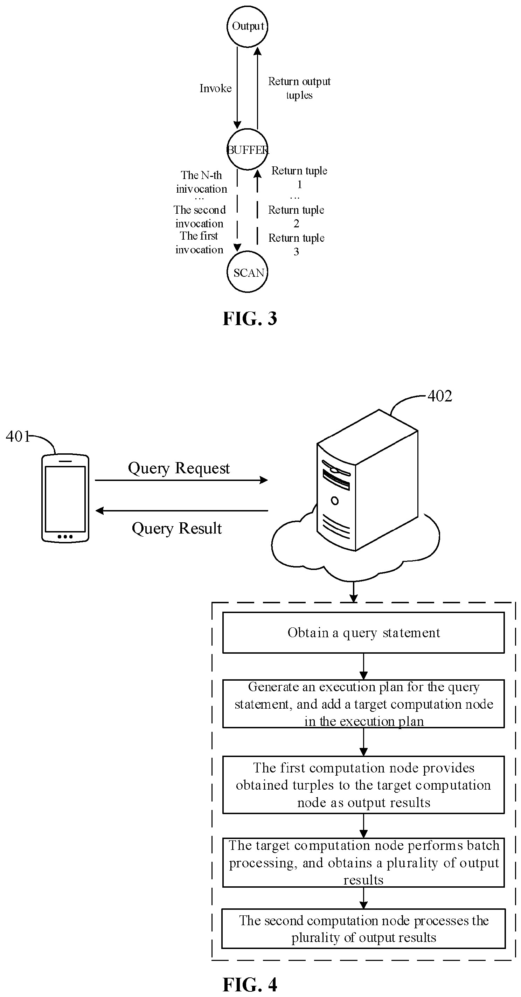

In the embodiment of the present disclosure, it is detected that the query statement involves a target operation, an operation expression corresponding to the target operation is a > encrypt (3), and a computation node that executes the target operation is the SCAN node. Therefore, the SCAN node may be used as the first computation node, and the Output node is used as the second computation node. The query statement is rewritten by wrapping a force function around the operation expression, and the rewritten query statement is implemented as SELECT * FROM t WHERE force (a > encrypt (3)). The rewritten query statement is parsed and an execution plan is generated, and a target computation node is added between the SCAN node and the Output node, which may be represented as a BUFFER node. For ease of understanding, FIG. 3 shows a schematic diagram of an embodiment of an execution plan.

As shown in FIG. 3, the SCAN node obtains one tuple from the storage medium and calls the force function each time it is executed. During verification of a WHERE clause, that is, in a case where the target operation a > encrypt (3) is performed on the obtained tuple, an operation result of each tuple is set to "true", that is, it is determined that the data content in column a of each tuple is greater than encrypted 3, all operation results pass verification, the data participating in the target operation is stored as data objects into the tuples, and the tuples are provided as output results to the BUFFER node.

The BUFFER node, as a parent node of the SCAN node, may store the plurality of tuples provided by the SCAN node, and in a case where a tuple storage capacity meets a processing requirement, call the force function to perform batch processing on the data objects in the plurality of stored tuples according to the target operation a > encrypt (3), to generate a plurality of operation results of the custom boolean type. Specifically, a decryption component may be invoked to decrypt the data objects in the tuples, the decrypted data objects are processed, and then operation data obtained from the processing is encrypted to obtain the operation results. The decryption component may be implemented as internal hardware or external hardware, and the present disclosure does not impose a limitation thereon. As shown in FIG. 3, the BUFFER node performs batch processing on the data objects in the N stored tuples, N operation results of the custom boolean type may be generated, where N is an integer greater than 1. Afterwards, the BUFFER node may also convert the N operation results to primitive boolean types respectively.

After generating the plurality of operation results, the BUFFER node may also determine a plurality of output results to be provided to the Output node, that is, the second computation node, that is, determine tuples whose operation results are "true" as the output results to be provided to the Output node. Afterwards, the plurality of output results may be sequentially placed into a storage queue in an order in which the corresponding tuples are provided to the BUFFER node.

The Output node, as a parent node of the BUFFER node, may call the BUFFER node to obtain tuples from the storage queue.

In the embodiment of the present disclosure, by adding the target computation node in the execution plan, an operation order of a traditional execution plan is changed. When the target computation node needs to return tuples to the second computation node, that is, its parent node, it is implemented that the target computation node first continuously obtains tuples from the first computation node, that is, its child node, stores the obtained plurality of tuples, and then performs batch processing, thereby transferring the actual target operation on the data in the tuples from the first computation node to the target computation node for batch execution, achieving local caching and batch computation of tuples, and universally extending various existing databases to support batch execution task scenarios such as machine learning, confidential computing, and heterogeneous computing with high performance. At the same time, because the plurality of tuples are stored in the order in which they are provided to the target computation node, an operation order for the data in the tuples is not changed. Moreover, the solution of the present embodiment belongs to a plug-in extension of an original computation scheme of the database, and does not modify original nodes or a computation engine of the database, is easy to iteratively upgrade with a product, and does not affect stability when database performance is improved.

As can be known from the above description, the query statement may be sent by a user through a client. As shown in FIG. 4, a schematic diagram of scenario interaction in a practical application of the embodiment of the present disclosure is shown.

The user may send a query request to a server 402 through a client 401, where the query request may include a query statement.

The client may be a browser, an application (APP), or a web application such as a HyperText Markup Language 5 (H5) application, or a light application (also referred to as a mini program, a lightweight application) or a cloud application, and the like. The client may be deployed in an electronic device, and needs to rely on the device for running or rely on certain apps in the device for running, and the like.

The server may include a server that provides various services, for example, a server that processes a query request sent by the client, and the like. It should be noted that the server may be implemented as a distributed server cluster composed of a plurality of servers, or may be implemented as a single server. The server may also be a server of a distributed system, or a server combined with blockchain. The server may also be a cloud server, or an intelligent cloud computing server or intelligent cloud host with artificial intelligence technology.

A database engine is deployed in the server. The database engine obtains and parses the query statement, generates an execution plan for the query statement, and adds a target computation node between a first computation node and a second computation node in the execution plan. Afterwards, the execution plan is executed, so that the first computation node provides the obtained tuples as output results to the target computation node, the target computation node stores the tuples provided by the first computation node and performs batch processing on the plurality of stored tuples according to a target operation, and a plurality of output results obtained from the batch processing are respectively provided to the second computation node. The second computation node may continue to process the plurality of output results and provide the processed output results to its parent node, and the like. After the execution plan is executed completely, a query result corresponding to the query statement is obtained. Afterwards, the server 402 may feedback the query result corresponding to the execution plan to the client 401.

By adding a target computation node as a parent node above the computation node that executes the target operation in the execution plan, tuples obtained by the first computation node are output to the target computation node for storing, and in a case where a tuple storage capacity of the target computation node meets processing requirements, batch processing is performed on a plurality of tuples, and a plurality of output results are provided to the second computation node, that is, the parent node of the target computation node. Compared with a tuple-by-tuple computation manner in a traditional scheme in which a computation node receives one tuple as input for computation and produces one tuple as output, batch execution is achieved, an operation process is simplified, and computation tasks in scenarios involving computation of a large number of tuples are better handled, expanding applicable scenarios for computation task execution.

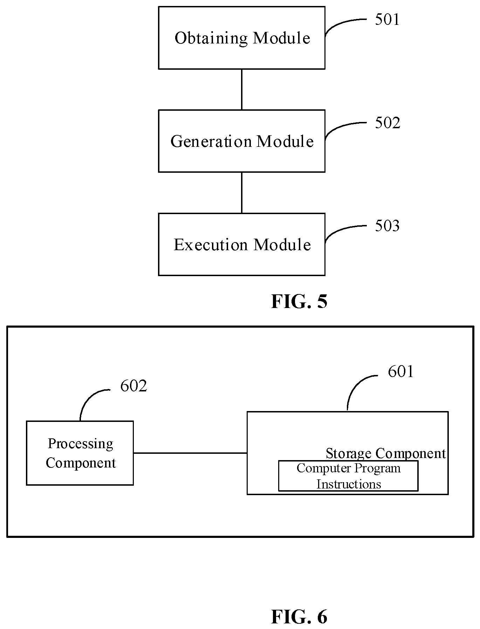

FIG. 5 shows a structural diagram of an embodiment of a data processing apparatus provided by the present disclosure, and the apparatus includes an obtaining module 501, a generation module 502, and an execution module 503.

The obtaining module 501 is configured to obtain a query statement.

The generation module 502 is configured to generate an execution plan for the query statement, and add a target computation node between a first computation node and a second computation node in the execution plan; where the first computation node is a computation node that executes a target operation; the target computation node serves as a parent node of the first computation node; and the second computation node serves as a parent node of the target computation node.

The execution module 503 is configured to execute the execution plan, so that the first computation node provides obtained tuples as output results to the target computation node; and the target computation node stores the tuples provided by the first computation node, performs batch processing on the plurality of stored tuples according to the target operation, and provides a plurality of output results obtained from the batch processing respectively to the second computation node.

In some embodiments, the generation module 502 may be specifically configured to generate the execution plan for the query statement, and in a case where the query statement involves a target operation that meets a preset condition, add the target computation node between the first computation node and the second computation node in the execution plan.

In some embodiments, the generation module 502 may be specifically configured to detect that the query statement involves a target operation; rewrite the query statement by wrapping a target execution function around an operation expression corresponding to the target operation; and parse the query statement to generate the execution plan, and in a case where the query statement includes the target execution function, add the target computation node between the first computation node and the second computation node in the execution plan.

In some embodiments, the target operation includes an operation that generates, according to a preconfigured custom type and operation requirement of the custom type, data of the custom type.

The execution module 503 may be specifically configured to: in the first computation node, in a case where the target operation is performed on the obtained tuples, determine that operation results pass verification, store data participating in the target operation as data objects into the tuples, and provide the tuples as output results to the target computation node; in the target computation node, perform batch processing on data objects in the plurality of stored tuples according to the target operation, to generate a plurality of operation results of the custom type; convert the plurality of operation results to corresponding primitive data types respectively; and determine, according to the plurality of operation results, a plurality of output results to be provided to the second computation node.

In some embodiments, the apparatus may further include a storage module, configured to store the plurality of output results in a processing order for the second computation node to sequentially obtain the plurality of output results.

In some embodiments, the storage module may be specifically configured to sequentially place the plurality of output results into a storage queue in an order in which the corresponding tuples are provided to the target computation node.

In some embodiments, the data participating in the target operation includes data of a primitive numeric type, and the target operation includes a numeric operation and/or a comparison operation that generates, according to the preconfigured custom type and the operation requirements of the custom type, data of the custom type.

The execution module 503 may be specifically configured to: in the target computation node, in a case where the target operation includes the numeric operation that generates, according to the preconfigured custom type and the operation requirements of the custom type, data of the custom type, perform batch processing on the data objects in the plurality of stored tuples according to the numeric operation to generate operation results of a custom numeric type; in a case where the target operation includes the comparison operation that generates, according to the preconfigured custom type and the operation requirements of the custom type, data of the custom type, perform batch processing on the data objects in the plurality of stored tuples according to the comparison operation to generate operation results of a custom boolean type; in a case where the target operation includes the numeric operation and the comparison operation that generate, according to the preconfigured custom type and the operation requirements of the custom type, data of the custom type, sequentially execute the numeric operation and the comparison operation on the data objects in the plurality of stored tuples in an operation order to perform batch processing, generate operation results of a custom numeric type in a case where a last operation in the operation order is the numeric operation, and generate operation results of a custom boolean type in a case where the last operation in the operation order is the comparison operation; and in a case where the operation results include operation results of the custom numeric type, convert the operation results of the custom numeric type to operation results of a primitive numeric type; in a case where the operation results include operation results of the custom boolean type, convert the operation results of the custom boolean type to operation results of a primitive boolean type.

In some embodiments, a database corresponding to the query statement is an encrypted database, and the data participating in the target operation includes ciphertext-type data.

The execution module 503 may be specifically configured to invoke external hardware to decrypt the data objects in the plurality of stored tuples, perform batch processing on the decrypted data objects according to the target operation to generate a plurality of operation data, and encrypt the plurality of operation data to obtain the plurality of operation results of the custom type.

In some embodiments, the obtaining module 501 may be specifically configured to receive a query statement sent by a client.

The apparatus may further include:
a sending module, configured to feed back a query result corresponding to the execution plan to the client.

FIG. 6 shows a structural schematic diagram of an embodiment of a computing device provided by the present disclosure, and the device includes a storage component 601 and a processing component 602.

The storage component 601 stores one or more computer program instructions, wherein the one or more computer program instructions are for the processing component 602 to call and execute, to implement the data processing method shown in FIG. 1.

In practical applications, the computing device may be implemented as the server in the system architecture shown in FIG. 4.

The processing component may include one or more processors to execute computer program instructions to complete all or some of the steps in the above method. Of course, the processing component may also be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic components, for executing the above method.

The storage component is configured to store various types of data to support operations at a terminal. The storage component may be implemented by any type of volatile or nonvolatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

Of course, the above computing device is necessarily further capable of including other components, such as an input/output interface, a communication component, and the like.

The input/output interface provides an interface between the processing component and a peripheral interface module, and the peripheral interface module may be an output device, an input device, or the like. The communication component is configured to facilitate wired or wireless communication between the computing device and other devices, and the like.

An embodiment of the present disclosure further provides a computer-readable storage medium storing a computer program, and when the computer program is executed by a computer, the data processing method shown in FIG. 1 is implemented. The computer-readable medium may be included in the computing device described in the above embodiments; or exists independently without being assembled into the computing device.

The computer-readable storage medium may be, but is not limited to, an electrical, magnetic, optical, electromagnetic, infrared, or semiconductor system, apparatus, or device, or any combination of the above, and the like.

An embodiment of the present disclosure further provides a computer program product storing a computer program, and when the computer program is executed by a computer, the data processing method shown in FIG. 1 is implemented.

In such an embodiment, the computer program may be downloaded and installed from a network, and/or installed from a removable medium. When the computer program is executed by a processor, various functions defined in the system of the present disclosure are performed.

It should be noted that the above computing device may be a physical device or an elastic computing host provided by a cloud computing platform, and the like. It may be implemented as a distributed cluster composed of a plurality of servers or terminal devices, or may be implemented as a single server or a single terminal device.

Those skilled in the art may clearly understand that, for convenience and brevity of description, for specific working processes of the system, apparatus, and units described above, reference may be made to corresponding processes in the foregoing method embodiments, and details are not repeated herein.

The apparatus embodiments described above are merely illustrative, wherein units described as separate components may or may not be physically separated, and components displayed as units may or may not be physical units, that is, may be located in one place, or may be distributed to a plurality of network units. Some or all of the modules may be selected according to actual needs to achieve the purpose of the solution of the present embodiment. Those of ordinary skill in the art may understand and implement the solution without creative effort.

From the description of the above implementations, those skilled in the art may clearly understand that the implementations are implemented by means of software plus a necessary general-purpose hardware platform, or of course by means of hardware. Based on such understanding, the technical solutions of the present disclosure in essence, or in other words, the part that contributes to the prior art, are embodied in the form of a software product. The computer software product may be stored in a computer-readable storage medium, such as a ROM/RAM, a magnetic disk, an optical disk, and the like, and includes a plurality of instructions for causing a computer device (which may be a personal computer, a server, or a network device, and the like) to perform the methods described in the various embodiments or some parts of the embodiments.

Finally, it should be noted that: the above embodiments are only used to illustrate the technical solutions of the present disclosure, and not to limit them; although the present disclosure has been described in detail with reference to the foregoing embodiments, those of ordinary skill in the art should understand that: modifications may still be made to the technical solutions described in the foregoing embodiments, or equivalent replacements may be made to some of the technical features; and these modifications or replacements do not cause the essence of the corresponding technical solutions to depart from the spirit and scope of the technical solutions of the embodiments of the present disclosure.

## Claims

1. A data processing method, comprising:
obtaining a query statement;
generating an execution plan for the query statement, and adding a target computation node between a first computation node and a second computation node in the execution plan; wherein the first computation node is a computation node that executes a target operation; the target computation node is a parent node of the first computation node; the second computation node is a parent node of the target computation node;
executing the execution plan to provide tuples obtained by the first computation node to the target computation node as output results;
storing, at the target computation node, the tuples provided by the first computation node, performing batch processing on a plurality of stored tuples according to the target operation, and providing a plurality of output results obtained from the batch processing to the second computation node.

2. The method of claim 1, wherein generating the execution plan for the query statement, and adding the target computation node between the first computation node and the second computation node in the execution plan, comprises:
generating the execution plan for the query statement, and adding the target computation node between the first computation node and the second computation node in the execution plan in a case where the query statement involves a target operation that meets a preset condition.

3. The method of claim 2, wherein the preset condition comprises one or more of the following implementations:
an operation targeting a specified data type;
an operation that meets a predetermined operation requirement;
an operation that invokes external hardware; and
an operation that generates, based on a preconfigured custom type and an operation requirement of the custom type, data of the custom type.

4. The method of claim 1, wherein generating the execution plan for the query statement, and adding the target computation node between the first computation node and the second computation node in the execution plan comprises:
detecting that the query statement involves a target operation;
rewriting the query statement by wrapping a target execution function around an operation expression corresponding to the target operation;
parsing the query statement to generate the execution plan, and adding the target computation node between the first computation node and the second computation node in the execution plan in a case where the query statement comprises the target execution function.

5. The method of claim 1, wherein the target operation comprises an operation that generates, based on a preconfigured custom type and an operation requirement of the custom type, data of the custom type;
providing the tuples obtained by the first computation node to the target computation node as the output results comprises:
in the first computation node, in a case where the target operation is performed on the obtained tuples, determining that operation results pass verification, storing data participating in the target operation as data objects in the tuples, and providing the tuples as output results to the target computation node;
performing batch processing on the plurality of stored tuples according to the target operation comprises:
in the target computation node, performing batch processing on data objects in the plurality of stored tuples according to the target operation to generate a plurality of operation results of the custom type;
converting the plurality of operation results to corresponding primitive data types, respectively; and
determining, based on the plurality of operation results, a plurality of output results to be provided to the second computation node.

6. The method of claim 1, further comprising:
storing the plurality of output results in a processing order, for the second computation node to sequentially obtain the plurality of output results.

7. The method of claim 6, wherein storing the plurality of output results in the processing order comprises:
sequentially placing the plurality of output results into a storage queue in an order in which corresponding tuples are provided to the target computation node; wherein the storage queue is a ring buffer or a structure of a linked list.

8. The method of claim 1, wherein performing batch processing on the data objects in the plurality of stored tuples according to the target operation comprises:
in the target computation node, invoking external hardware to perform batch processing on the data objects in the plurality of stored tuples according to the target operation.

9. The method of claim 5, wherein the data participating in the target operation comprises data of a primitive numeric type, and the target operation comprises a numeric operation and/or a comparison operation that generates, based on the preconfigured custom type and the operation requirement of the custom type, data of the custom type;
in the target computation node, performing batch processing on the data objects in the plurality of stored tuples according to the target operation to generate the plurality of operation results of the custom type comprises:
in the target computation node, in a case where the target operation comprises the numeric operation that generates, based on the preconfigured custom type and the operation requirement of the custom type, data of the custom type, performing batch processing on the data objects in the plurality of stored tuples according to the numeric operation to generate operation results of a custom numeric type;
in a case where the target operation comprises the comparison operation that generates, based on the preconfigured custom type and the operation requirement of the custom type, data of the custom type, performing batch processing on the data objects in the plurality of stored tuples according to the comparison operation to generate operation results of a custom boolean type;
in a case where the target operation comprises both the numeric operation and the comparison operation that generate, based on the preconfigured custom type and the operation requirement of the custom type, data of the custom type, performing batch processing on the data objects in the plurality of stored tuples by sequentially executing the numeric operation and the comparison operation in an operation order, generating operation results of a custom numeric type in a case where a last operation in the operation order is the numeric operation, and generating operation results of a custom boolean type in a case where the last operation in the operation order is the comparison operation;
converting the plurality of operation results to the corresponding primitive data types, comprises:
in a case where the operation results comprise operation results of the custom numeric type, converting the operation results of the custom numeric type to operation results of a primitive numeric type; and
in a case where the operation results comprise operation results of the custom boolean type, converting the operation results of the custom boolean type to operation results of a primitive boolean type.

10. The method of claim 5, wherein a database corresponding to the query statement is a fully encrypted database, and the data participating in the target operation comprises ciphertext-type data;
performing batch processing on the data objects in the plurality of stored tuples according to the target operation to generate the plurality of operation results of the custom type comprises:
invoking a decryption component to decrypt the data objects in the plurality of stored tuples, performing batch processing on the decrypted data objects according to the target operation to generate a plurality of operation data, and encrypting the plurality of operation data to obtain the plurality of operation results of the custom type.

11. The method of claim 1, wherein obtaining the query statement comprises:
receiving the query statement sent by a client;
the method further comprising:
feeding back a query result corresponding to the execution plan to the client.

12. A computing device, comprising a storage component and a processing component; wherein the storage component stores one or more computer program instructions, the computer program instructions are configured to be invoked and executed by the processing component, and the processing component executes the one or more computer program instructions to implement the data processing method according to any one of claims 1 to 11.

13. A computer-readable storage medium storing a computer program, wherein the computer program is executed by a computer to implement the data processing method according to any one of claims 1 to 11.

14. A computer program product storing a computer program, wherein when the computer program is executed by a computer, the data processing method according to any one of claims 1 to 11 is implemented.
